# EUROPEAN PATENT SPECIFICATION

(11) **EP 4 020 513 B1**
(45) Date of publication and mention of the grant of the patent: **20.03.2024**
(21) Application number: 20866699.0
(22) Date of filing: 21.08.2020
(51) Int. Cl.: H01H 13/14, H04M 1/23, H01H 13/02, H01H 13/04, H01H 13/705, G06F 1/16, G06F 3/02, H01H 13/86

(54) **ELECTRONIC DEVICE**
ELEKTRONISCHE VORRICHTUNG
DISPOSITIF ÉLECTRONIQUE

(30) Priority: 19.09.2019 CN 201921589921 U
(43) Date of publication of application: 29.06.2022
(73) Proprietor: Huawei Technologies Co., Ltd., Longgang District Shenzhen, Guangdong 518129 (CN)
(72) Inventor: ZOU, Mengruo, Shenzhen, Guangdong 518129 (CN); WU, Peng, Shenzhen, Guangdong 518129 (CN); LIU, Jie, Shenzhen, Guangdong 518129 (CN); WANG, Gangchao, Shenzhen, Guangdong 518129 (CN); PAN, Yongwei, Shenzhen, Guangdong 518129 (CN)
(74) Representative: Isarpatent
(86) International application number: PCT/CN2020/110452
(87) International publication number: WO 2021/052106

(56) References cited:
- EP-A1- 3 340 264
- WO-A1-2016/104161
- CN-A- 108 140 504
- CN-A- 110 138 946
- CN-A- 111 447 761
- CN-U- 210 778 356
- JP-A- 2013 187 152
- KR-A- 20140 025 065
- KR-A- 20150 082 046
- KR-A- 20150 082 046
- US-A1- 2007 034 493
- US-A1- 2019 066 944

## Description

Priority is claimed to Chinese Patent Application No. 201921589921.0, published as CN210778356 and filed with the China National Intellectual Property Administration on September 19, 2019, and entitled "ELECTRONIC DEVICE".

### TECHNICAL FIELD

This disclosure relates to the technical field of electronic devices, and the invention in particular, relates to an electronic device.

### BACKGROUND

With the continuous development of curved display technologies, curvature of an arc-shaped edge of a curved display in an electronic device becomes increasingly large, so as to better meet requirements of users. However, a frame of a conventional electronic device is usually provided with power or volume buttons, and the buttons need to occupy most space of the frame in this case. As a result, a curved display with large curvature cannot be implemented, and the requirements of users cannot be effectively met. The following documents disclose some further published background technology details relating to the above described electronic devices.

EP 3 340 264 A1 discloses an electronic device and an electronic device manufacturing method and the background technology details are here disclosed in paragraphs [0046], [0052], [0054] and [0070] and shown in FIGs 4, 7-10 of this document.

US 2019/066944 A1 discloses a physical button mechanism and an electronic device with such a mechanism. The background technology details are here disclosed in paragraphs [0012]-[0023] and in FIGs 2, 3 and the corresponding text of this document.

KR 2015 008 2046 A discloses an electronic device including a button. The background technology details are here disclosed in paragraphs [0034]-[0136] (in particular in paragraphs [0007] and [0062]) and in FIGs 2-14 (in particular FIG. 3, FIG. 4 and FIG. 9) of this document.

KR 2014 0025065 discloses a mobile terminal with a display. The background technology details are here disclosed in paragraphs [0043]-[0066] and in FIGs 3-5b (i particular FIG. 3 and FIG. 4) of this document.

CN 110 138 946 A relates to a electronic equipment including a shell assembly. The background technology details are here disclosed in FIGs 3, 4, 8 and the corresponding text of this document.

US 2007/034493 A1 discloses a waterproof structure of a push button with. The background technology details are here disclosed in FIGs 3, 4, 8 and the corresponding text of this document.

JP 2013 187 152 A relates to a push button switch structure and an electronic apparatus including same. The background technology details are here disclosed in paragraphs [0044] -[0048] (in particular in paragraph [0030]) and in FIGs 3-5 and in particular in FIG. 6 of this document.

### SUMMARY

The object of the present invention is to provide an electronic device, so that curvature of a curved display in the electronic device can be significantly increased. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such.

The invention provides an electronic device. The electronic device includes a curved display, a back cover, a frame, and a button assembly. The curved display is disposed opposite the back cover, and edges of the curved display are bent toward the back cover. The frame is located between the curved display and the back cover. The curved display, the back cover, and the frame enclose an accommodation space. The frame is provided with a communication space. The communication space allows the accommodation space to communicate with the outside of the electronic device. The button assembly includes a switching member and a pressing member. The switching member is located in the accommodation space. The pressing member includes a first end portion and a second end portion. The second end portion is located in the accommodation space. At least part of the second end portion is disposed opposite the switching member. The first end portion is exposed to the outside of the electronic device through the communication space. A Z-direction distance of the first end portion from the back cover is a first distance. A Z-direction distance of the second end portion from the back cover is a second distance. The first distance is less than the second distance.

It may be understood that when the first distance is less than the second distance, the first end portion is disposed close to the back cover to a large extent. In this case, the curved display can be bent to a large extent to extend to a position close to the back cover. In other words, the curved display can occupy much space of the frame. In this case, an area of the display surface of the curved display is significantly increased. A user has a wider field of view when viewing the curved display, and this can better meet requirements of the user. In addition, when the curved display can be bent to a large extent to extend to a position close to the back cover, a bending angle of the curved display is also significantly increased, thereby meeting the requirement of the user for a large bending angle.

In an implementation, the curved display includes a plane portion and a bent portion joining either side of the plane portion. The bent portion is bent toward the back cover. A bending angle of the bent portion ranges from 60° to 120°.

It may be understood that when the bending angle of the bent portion ranges from 60° to 120°, the bent portion can occupy much space of the frame. In this case, an area of a second display surface of the bent portion is significantly increased. In this case, the user has a wider field of view when viewing the curved display, and this can better meet requirements of the user. In addition, when the curved display can be bent to a large extent to extend to a position close to the back cover, a bending angle of the curved display is also significantly increased, thereby meeting the requirement of the user for a large bending angle.

In an implementation, the pressing member includes a cap and a push rod that are disposed opposite each other. An end portion of the cap away from the push rod is the first end portion. An end portion of the push rod away from the cap is the second end portion. When a force is applied to the cap, the cap pushes the push rod. The push rod applies an acting force to the switching member.

It may be understood that when a force is applied to the cap, the cap pushes the push rod, so that the push rod applies an acting force to the switching member. In this case, the user can press the cap to apply an acting force to the switching member disposed in the accommodation space, and the operation is simple and easy to control.

In an implementation, an outer surface of the frame is provided with a groove and a first through hole. An opening of the first through hole is located on a bottom wall of the groove. The first through hole communicates with the accommodation space. The groove and the first through hole form the communication space. The push rod includes a push portion and an elastic portion disposed on the push portion. One end of the push portion is disposed opposite the cap. The other end of the push portion away from the cap is the second end portion. An outer surface of the elastic portion is in contact with a hole wall of the first through hole.

It may be understood that the outer surface of the elastic portion is in contact with the hole wall of the first through hole. In this case, the elastic portion is pressed between the hole wall of the first through hole and the push portion, that is, the elastic portion can effectively seal a gap between the hole wall of the first through hole and the push portion. Therefore, when water or dust from the outside enters the first through hole through the groove, the elastic portion can effectively block the water or dust from entering the accommodation space, thereby preventing the water or dust from damaging the switching member.

In an implementation, the frame is further provided with a second through hole and a third through hole that are spaced apart. Openings of both the second through hole and the third through hole are located on the bottom wall of the groove, and the second through hole and the third through hole are located on two sides of the first through hole. The button assembly further includes a pin. The pin is mounted in the second through hole. The cap includes a pressing portion, a first hook portion, and a second hook portion. The first hook portion and the second hook portion are respectively connected to two ends of the pressing portion. Part of the pressing portion is located in the groove. The first hook portion extends through the groove into the second through hole and is hooked to the pin. The second hook portion extends through the groove into the third through hole and is hooked to a hole wall of the third through hole.

It may be understood that, in the foregoing arrangement, both the first hook portion and the second hook portion can be fitted onto the frame in a fitting process of the cap. Specifically, the first hook portion extends through the groove into the second through hole. The second hook portion extends through the groove into the third through hole. Then the second hook portion is hooked to the hole wall of the third through hole. Then the pin is fixedly connected in the third through hole, so that the second hook portion is hooked to the pin. In this case, the cap does not come out of the groove.

According to the invention, the switching member includes a switch and a flexible circuit board. The flexible circuit board includes a first section and a second section. The second section is bent and connected to the first section. The switch is mounted to the first section and is electrically connected to the first section. The second end portion is disposed opposite the switch. An included angle between the first section and a first direction ranges from 60° to 120°. The first direction is a direction in which the second end portion faces the first end portion.

It may be understood that setting the included angle between the first section and the first direction to be from 60° to 120° ensures that the pressing member can exactly press on the switching member. In addition, at this angle, the user can easily apply an acting force to the switching member via the pressing member. In other words, there is no need to apply a large force to the pressing member, and the pressing member can cause the switch to generate an electrical signal. Therefore, the user feels good when pressing the button assembly.

In an implementation, the switching member further includes an elastic member. The elastic member covers the switch. The pressing member presses on the elastic member, and the elastic member exerts a force on the switch to cause the switch to generate an electrical signal.

It may be understood that the elastic member can apply an acting force to the switch under the action of an external force, to cause the switch to turn on and generate an electrical signal. In addition, when not subjected to a force, the elastic member can further push the pressing member to its original position, and disconnect the switch from the electrical connection. The elastic member can be further configured to effectively protect the switch from damage due to collision with other components. The elastic member can be used for three purposes.

In an implementation, the elastic member includes a middle portion and a peripheral portion connected to the periphery of the middle portion. The middle portion is disposed opposite the second end portion. The peripheral portion is provided with a via hole.

It may be understood that when the peripheral portion is provided with the via hole, the peripheral portion has better elasticity. In other words, the via hole can reduce stress of the peripheral portion. In this case, when the pressing member presses on the middle portion of the elastic member, the middle portion is more easily deformed because the peripheral portion has better elasticity. Therefore, the user does not need to apply a very large force to deform the middle portion, so that the user feels much better when pressing the button assembly. In addition, because the user presses the button assembly with a relatively small force, the elastic member is also subjected to relatively small pressure, and the elastic member is not easily damaged due to relatively large pressure, thereby ensuring a relatively long service life of the elastic member.

In an implementation, the elastic member includes a metal portion and a soft rubber portion. Part of the metal portion is embedded in the soft rubber portion. Part of the metal portion is exposed from the soft rubber portion.

It may be understood that the metal portion is embedded in the soft rubber portion, which can increase a capability of the elastic member to resist an external force, that is, avoid the failure of the soft rubber portion due to long-term use, thereby significantly extending the service life of the elastic member; in addition, the metal portion facilitates the fixed connection to other components.

According to the invention, the switching member further includes a fastening bracket. The fastening bracket includes a fastening portion and a bearing portion connected to the fastening portion. The fastening portion is fixedly connected to the frame. The bearing portion is fixedly connected to a surface of the first section that is away from the switch.

The fastening portion of the fastening bracket is fixedly connected to the frame, so that the flexible circuit board fixedly connected to the fastening bracket can be firmly connected to the frame. In addition, because the switch is mounted to the flexible circuit board, and the elastic member covers the switch, the flexible circuit board, the switch, and the elastic member can be fixedly connected to the frame together with the fastening bracket. In this case, the switching member and the frame are connected more firmly, that is, the switching member and the frame have better stability.

According to the invention, the switching member further includes a fastener. The fastener locks the fastening portion to the frame.

It may be understood that the fastener locks the fastening portion to the frame, and a fitting process is simple and easy to operate.

According to the invention, the fastener includes a first end and a second end that are disposed opposite each other. The first end is an end portion of the fastener that is away from the frame. The second end is an end portion of the fastener that is locked to the frame. A Z-direction distance of the first end from the back cover is a third distance. A Z-direction distance of the second end from the back cover is a fourth distance. The third distance is less than the fourth distance.

It may be understood that because the first end is the end portion of the fastener that is away from the frame, and the second end is the end portion of the fastener that is locked to the frame, the first end is the end to which the user applies a force. In other words, the user applies a force to the first end, so that the second end of the fastener is locked to the frame. Before the back cover is fitted to the frame, one side of the frame close to the back cover is an opening region, that is, a region open to the outside. Therefore, when the third distance is less than the fourth distance, the first end faces the opening region. In this case, when the user is to apply pressure to the first end, the working personnel may apply a force to the first end through the opening region. In this case, there is much space for the working personnel to apply a force, and the fitting difficulty is relatively low.

In addition, when the fitting difficulty for the working personnel is low, the fastener is more easily locked, that is, the frame and the fastening bracket are easier to be fixedly connected and to be connected more tightly.

### BRIEF DESCRIPTION OF DRAWINGS

FIG. 1 is a schematic diagram of a structure of an implementation of an electronic device according to an embodiment of this application;
FIG. 2 is a partial schematic exploded view of the electronic device shown in FIG. 1;
FIG. 3 is a partial schematic sectional view of the electronic device shown in FIG. 1 at line A-A;
FIG. 4 is a schematic exploded view of a pressing member of the electronic device shown in FIG. 1;
FIG. 5 is a partial schematic sectional view of the electronic device shown in FIG. 1 at line B-B;
FIG. 6 is a schematic exploded view of a button assembly of the electronic device shown in FIG. 1;
FIG. 7 is a schematic diagram of a partial structure of a button assembly of the electronic device shown in FIG. 1;
FIG. 8 is a schematic diagram of a structure of a switching member of the electronic device shown in FIG. 1;
FIG. 9 is a schematic diagram of a structure from a perspective of an elastic member of the switching member shown in FIG. 8;
FIG. 10 is a schematic diagram of a structure from another perspective of an elastic member of the switching member shown in FIG. 8;
FIG. 11 is a schematic exploded view of the elastic member shown in FIG. 10;
FIG. 12 is a schematic diagram of a structure of a fastening bracket of the switching member shown in FIG. 8;
FIG. 13 is a schematic diagram of a partial structure of the electronic device shown in FIG. 1; and
FIG. 14 is a partial schematic sectional view of the electronic device shown in FIG. 13 at line C-C.

### DETAILED DESCRIPTION OF EMBODIMENTS

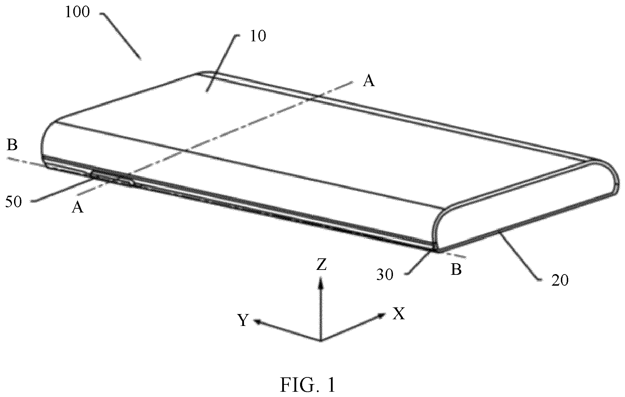

Referring to FIG. 1, FIG. 1 is a schematic diagram of a structure of an implementation of an electronic device 100 according to an embodiment of this application. The electronic device 100 may be a tablet computer, a mobile phone, a camera, a personal computer, a notebook computer, a vehicle-mounted device, a wearable device, augmented reality (augmented reality, AR) glasses, an AR helmet, virtual reality (virtual reality, VR) glasses, or a VR helmet. In the embodiment shown in FIG. 1, descriptions are provided by using an example in which the electronic device 100 is a mobile phone. For ease of description, as shown in FIG. 1, a width direction of the electronic device 100 is defined as an X axis, a length direction of the electronic device 100 is a Y axis, and a thickness direction of the electronic device 100 is a Z axis.

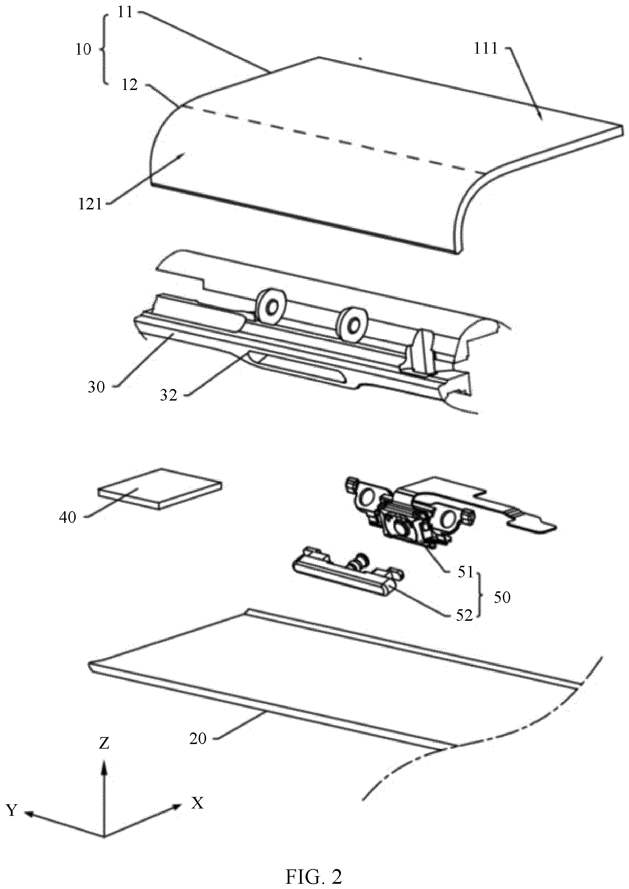

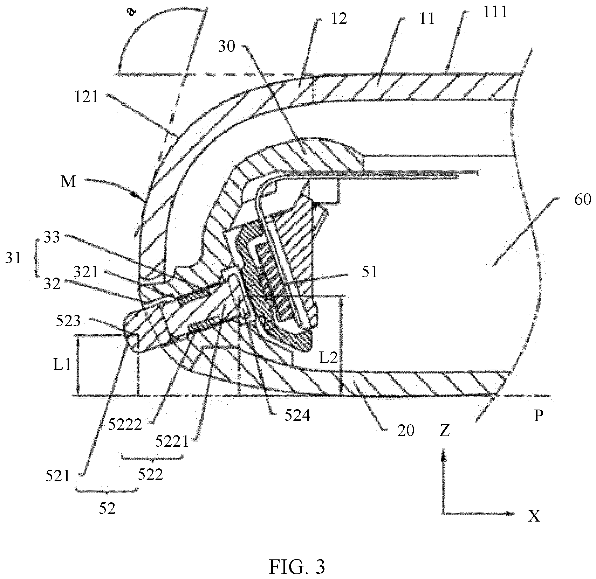

Referring to FIG. 2 and FIG. 3, FIG. 2 is a partial schematic exploded view of the electronic device 100 shown in FIG. 1; and FIG. 3 is a partial schematic sectional view of the electronic device 100 shown in FIG. 1 at line A-A.

The electronic device 100 includes a curved display 10, a back cover 20, a frame 30, a main board 40, and a button assembly 50. The curved display 10 is disposed opposite the back cover 20, and edges of the curved display 10 are bent toward the back cover 20. The frame 30 is located between the curved display 10 and the back cover 20.

In an implementation, the curved display 10 is a 2.5-dimensional (Dimensions, D) curved display. The curved display 10 includes a plane portion 11 and a bent portion 12 joining the plane portion 11. It may be understood that the plane portion 11 is a portion of the curved display 10 parallel with the X-Y plane, and the bent portion 12 is a curved portion of the curved display 10. In this case, the plane portion 11 is a larger region in the curved display 10, that is, the plane portion 11 occupies most of the region of the electronic device 100 in the X-Y plane. In other implementations, the curved display 10 may also be a 3D curved display. The following mainly uses the 2.5D curved display as an example for description.

In addition, the plane portion 11, the bent portion 12, the back cover 20, and the frame 30 enclose an accommodation space 60. The accommodation space 60 may be configured to receive a component such as a microphone, a speaker, or a battery. With reference to FIG. 1, the curved display 10, the back cover 20, and the frame 30 form a roughly rectangular structure.

In an implementation, the electronic device 100 may further include a middle plate (not shown in the figure). The middle plate is a plate-like structure. The middle plate may be formed by an injection molding process. The middle plate may be directly formed on the frame 30, thereby forming a whole with the frame 30. In this case, the overall strength of the middle plate and the frame 30 is better. The middle plate is configured to bear the plane portion 11. In this case, the middle plate can not only ensure stability of connection between the plane portion 11 and the frame 20, but also can provide a support force for the plane portion 11, to avoid the collapse of the plane portion 11.

In addition, the main board 40 may be mounted in the accommodation space 60. The main board 40 is provided with a processor (not shown in the figure) and a memory (not shown in the figure). The memory is configured to store computer program code. The computer program code includes computer instructions. The processor is configured to invoke the computer instructions to cause the electronic device 100 to perform corresponding operations.

In addition, the curved display 10 is configured to display an image. To be specific, both the plane portion 11 and the bent portion 12 may be configured to display an image. For example, the plane portion 11 has a first display surface 111 away from the accommodation space 60. The bent portion 12 has a second display surface 121 away from the accommodation space 60. It may be understood that the first display surface 111 is a plane parallel with the X-Y plane. The second display surface 121 is a curved surface. In addition, the first display surface 111 and the second display surface 121 form a complete display surface with a relatively large area. Therefore, when a user views an electronic image from the first display surface 111 and the second display surface 121, the user has a relatively wide field of view.

In addition, the curved display 10 may be, but is not limited to, a liquid crystal display (liquid crystal display, LCD). The curved display 10 may also be an organic light-emitting diode (Organic Light-Emitting Diode, OLED) display. In addition, the curved display 10 may further integrate a touch function. In other words, the curved display 10 is a touch display. In this case, the curved display 10 is electrically connected to the main board 40. The curved display 10 can generate a touch signal and deliver the touch signal to the processor of the main board 40. The processor receives the touch signal, and controls the opening of an application (Application, app) in the curved display 10 based on the touch signal.

In addition, one part of the button assembly 50 may be mounted in the accommodation space 60, and the other part of the button assembly 50 may be exposed from the frame 30. The button assembly 50 may further be buttons for turning up/down volume. The button assembly 50 may be electrically connected to the main board 40. In this case, when the button assembly 50 is pressed, the button assembly 50 can generate an electrical signal, and deliver the electrical signal to the processor of the main board 40. The processor receives the electrical signal, and lights up, based on the electrical signal, the curved display 10, that is, turns on the curved display 10. As shown in FIG. 1, part of the button assembly 50 is exposed to the outside of the electronic device 100.

Referring again to FIG. 2 and FIG. 3, the frame 30 may be provided with a groove 32 and a first through hole 33. The groove 32 is recessed from an outer surface of the frame 30 toward the accommodation space 60. The shape of the groove 32 is not limited to a bar shape illustrated in FIG. 2. Alternatively, the groove 32 may be cylindrical. In addition, an opening of the first through hole 33 is located on a bottom wall 321 of the groove 32. The first through hole 33 may communicate with the accommodation space 60. The groove 32 and the first through hole 33 form a communication space 31. In this case, the communication space 31 allows the accommodation space 60 to communicate with the outside of the electronic device 100. In this case, a part of the button assembly 50 is exposed to the outside of the electronic device 100 through the communication space 31.

In addition, the button assembly 50 includes a switching member 51 and a pressing member 52. The switching member 51 is mounted in the accommodation space 60. The switching member 51 is electrically connected to the main board 40. In addition, a first part of the pressing member 52 may be mounted in the accommodation space 60. A second part of the pressing member 52 may be mounted in the communication space 31. The first part of the pressing member 52 may be exposed to the outside of the electronic device 100. In other words, the first part of the pressing member 52 may protrude from the electronic device 100 through the communication space 31.

It may be understood that the pressing member 52 is configured to apply an acting force to the switching member 51, so that the switching member 51 generates an electrical signal to be transferred to the main board 40. For example, when the user presses the pressing member 52, the pressing member 52 moves toward the accommodation space 60. The pressing member 52 applies pressure to the switching member 51, and the switching member 51 generates an electrical signal and transmits the electrical signal to the main board 40.

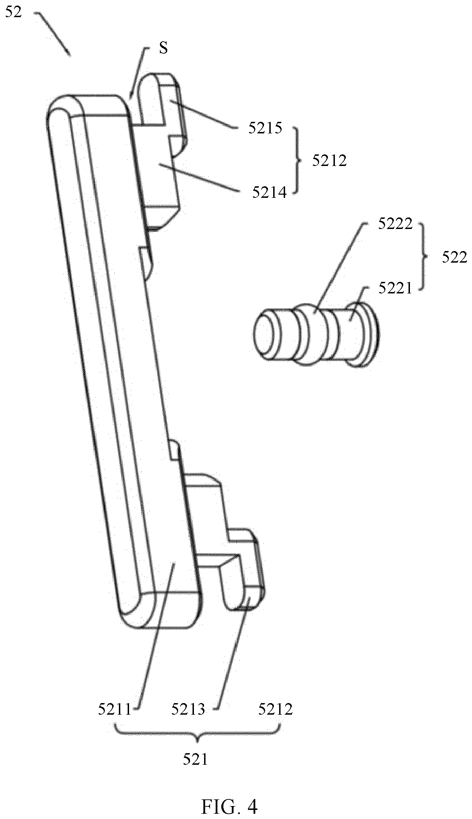

Referring to FIG. 3 and FIG. 4, FIG. 4 is a schematic exploded view of a pressing member 52 of the electronic device shown in FIG. 1.

The pressing member 52 includes a cap 521 and a push rod 522 that are disposed opposite each other. A first part of the cap 521 may be located in the groove 32, and a second part of the cap 521 may be exposed to the outside of the electronic device 100. A first part of the push rod 522 is located in the groove 32, and a second part of the push rod 522 may be located in the first through hole 33. A third part of the push rod 522 may be located in the accommodation space 60. In other words, the push rod 522 extends from the groove 32 through the first through hole 33 into the accommodation space 60. It may be understood that when the push rod 522 is mounted to the frame 30, the push rod 522 may extend from the groove 32 through the first through hole 33 into the accommodation space 60. Certainly, the push rod 522 may alternatively pass from the accommodation space 60 through the first through hole 33 into the groove 32.

In addition, an end portion of the cap 521 away from the push rod 522 is a first end portion 523. The first end portion 523 may be exposed to the outside of the electronic device 100. An end portion of the push rod 522 away from the cap 521 is a second end portion 524. The second end portion 524 is located in the accommodation space 60. At least part of the second end portion 524 is disposed opposite the switching member 51. It may be understood that when at least part of the second end portion 524 is disposed opposite the switching member 51, the second end portion 524 can apply an acting force to the switching member 51. When the user presses the first end portion 523, the cap 521 pushes the push rod 522, so that the second end portion 524 of the push rod 522 applies an acting force to the switching member 51, and the switching member 51 generates an electrical signal and delivers the electrical signal to the main board 40.

In addition, a Z-direction distance of the first end portion 523 from the back cover 20 is a first distance L1. AZ-direction distance of the second end portion 524 from the back cover 20 is a second distance L2. FIG. 3 defines a plane P. The plane P is substantially parallel with a plane in which the back cover 20 is located. In addition, during the calculation of the first distance L1 and the second distance L2, the center of the first end portion 523 and the center of the second end portion 524 are used as reference points. It may be understood that the first distance L1 being less than the second distance L2 means that a vertical distance of the first end portion 523 from the first display surface 111 is greater than a vertical distance of the second end portion 524 from the first display surface 111. In this case, the pressing member 52 is inclined relative to the X-Y plane, and the first end portion 523 is disposed closer to the back cover 20 than the second end portion 524. In other words, the first end portion 523 of the pressing member 52 is disposed close to the back cover 20. In this case, the vertical distance of the first end portion 523 from the first display surface 111 is greater than the vertical distance of the second end portion 524 from the first display surface 111.

It may be understood that when the first distance L1 is less than the second distance L2, the first end portion 523 is disposed close to the back cover 20 to a large extent. In this case, a distance between the first end portion 523 and the plane portion 11 can be increased to a large extent. Therefore, the bent portion 12 can be bent to a large extent to extend to a position close to the back cover 20. In other words, the bent portion 12 can occupy much space of the frame 30. In this case, an area of the second display surface 121 of the bent portion 12 is significantly increased. The user has a wider field of view when viewing the curved display 30, and this can better meet requirements of the user. In addition, when the bent portion 12 can be bent to a large extent to extend to a position close to the back cover 20, a bending angle of the bent portion 12 is also significantly increased, thereby meeting the requirement of the user for a large bending angle.

In addition, when the first end portion 523 is inclined and disposed closer to the back cover 20 than the second end portion 524, the second end portion 524 can be disposed close to the bent portion 12 to a large extent. That is, part of the button assembly 50 can be fitted in a surrounding region of the bent portion 12. It may be understood that the surrounding region of the bent portion 12 is relatively narrow, and it is difficult to fit most of the components in the region. In this case, the first end portion 523 is inclined and disposed closer to the back cover 20 than the second end portion 524, so that part of the button assembly 50 is fitted in the surrounding region of the bent portion 12. In this way, the button assembly 50 can effectively utilize the region, thereby avoiding a waste of the part of region due to idleness, and significantly improving utilization of the internal space of the electronic device 100.

In addition, when part of the button assembly 50 is located in the surrounding region of the bent portion 12, most of projection of the button assembly 50 in the Y-Z plane can overlap projection of the bent portion 12 in the Y-Z plane. In other words, the button assembly 50 and the bent portion 12 have a relatively large overlapping region in the Z direction, thereby significantly reducing the thickness of the electronic device 100 in the Z direction.

In an implementation, a bending angle of the bent portion 12 ranges from 60° to 120°. For example, the bending angle of the bent portion 12 may be 60°, 70°, 80°, 81.2°, 85°, 90°, 100°, 105°, 120°, or the like. It may be understood that the bending angle is an angle between a plane in which the plane portion 11 is located and a tangent plane at any position on the bent portion 12. For example, FIG. 3 illustrates a bending angle a at M on the second display surface 121. In this case, when the bending angle of the bent portion 12 ranges from 60° to 120°, the second display surface 121 has a relatively large area, so that when viewing the electronic device 100, the user has a wider field of view and has a better user experience.

Referring again to FIG. 3 and FIG. 4, the push rod 522 includes a push portion 5221 and an elastic portion 5222 disposed on the push portion 5221. The elastic portion 5222 may be, but is not limited to, rubber. The elastic portion 5222 is disposed on part of the outer surface of the push portion 5221. One end of the push portion 5221 faces the cap 521, and the other end thereof extends through the first through hole 33 into the accommodation space 60 and faces the switching member 51. The end portion of the push portion 5221 that faces the switching member 51 is the second end portion 524. It may be understood that the one end of the push portion 5221 may be in contact with the cap 521, or there may be a gap between the one end of the push portion 5221 and the cap 521. In addition, the second end portion 524 may be in contact with the switching member 51, or there may be a gap between the second end portion 524 and the switching member 51.

In addition, an outer surface of the elastic portion 5222 is in contact with a hole wall of the first through hole 33. In this case, the elastic portion 5222 is pressed between the hole wall of the first through hole 33 and the push portion 5221, that is, the elastic portion 5222 can effectively seal a gap between the hole wall of the first through hole 33 and the push portion 5221. Therefore, when water or dust from the outside enters the first through hole 33 through the groove 32, the elastic portion 5222 can effectively block the water or dust from entering the accommodation space 60, thereby preventing the water or dust from damaging the switching member 51.

It may be understood that when the user presses the cap 521, the cap 521 presses on the push portion 5221 of the push rod 522. The push portion 5221 moves toward the switching member 51 under the pushing of the cap 521. At this time, the other end of the push portion 5221 presses on the switching member 51, so that the switching member 51 generates an electrical signal. In addition, because the push portion 5221 is sheathed with the elastic portion 5222, the elastic portion 5222 can also move along with the push portion 5221. Therefore, during the movement of the push portion 5221, the elastic portion 5222 can always effectively seal the gap between the hole wall of the first through hole 33 and the push portion 5221, thereby effectively ensuring that water or dust does not enter the accommodation space 60 during the movement of the push rod 522.

Referring again to FIG. 4, the outer surface of the push portion 5221 is provided with a recessed area (not shown). The elastic portion 5222 is located in the recessed area. In this case, when the push portion 5221 moves in the first through hole 33, the elastic portion 5222 can also move along with the push portion 5221. In this case, because the push portion 5221 is located in the recessed area, a side wall of the recessed area can effectively limit the movement of the elastic portion 5222, thereby preventing the elastic portion 5222 from coming out of the push portion 5221.

In an implementation, an outer peripheral surface of the elastic portion 5222 is in contact with a wall surface of the recessed area. In this case, the elastic portion 5222 and the push portion 5221 are connected more firmly, that is, the elastic portion 5222 does not easily fall off the push portion 5221.

In an implementation, the recessed area is a ring-shaped structure. In this case, most of the elastic portion 5222 is received in the ring-shaped recessed area. The elastic portion 5222 and the push portion 5221 are connected more firmly.

Referring again to FIG. 4, the cap 521 includes a pressing portion 5211, a first hook portion 5212, and a second hook portion 5213. The first hook portion 5212 and the second hook portion 5213 are located on the same side of the pressing portion 521. The first hook portion 5212 and the second hook portion 5213 are respectively connected to two ends of the pressing portion 521.

Specifically, the first hook portion 5212 includes a first part 5214 and a second part 5215 joining the first part 5214. The first part 5214 is connected between the pressing portion 5211 and the second part 5215. The second part 5215 extends away from the second hook portion 5213. In this case, a movement space S is formed between the second part 5213 and the pressing portion 5211. Likewise, a structure of the second hook portion 5213, for the most part, is the same as the structure of the first hook portion 5212, and details are not described herein again. A difference is that a second part of the second hook portion 5213 extends away from the first hook portion 5212.

In an implementation, the pressing portion 5211, the first hook portion 5212, and the second hook portion 5213 are integrally formed. Certainly, in other implementations, the pressing portion 5211, the first hook portion 5212, and the second hook portion 5213 may also be secured by welding, glue, or other securing methods.

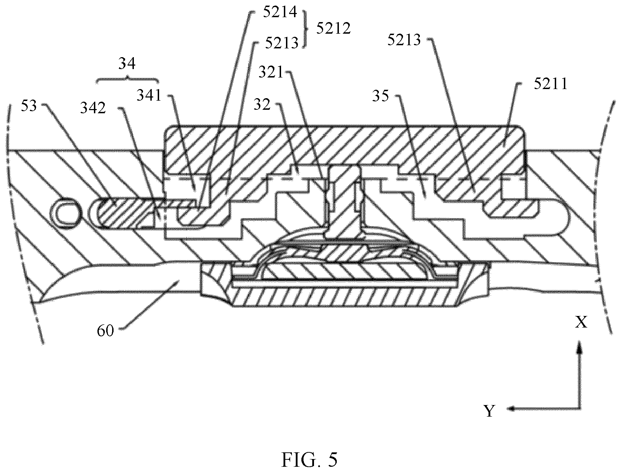

Referring to FIG. 5, FIG. 5 is a schematic sectional view of the electronic device 100 shown in FIG. 1 at line B-B.

The bottom wall 321 of the groove 32 is further provided with a second through hole 34 and a third through hole 35 that are spaced apart. In FIG. 5, the groove 32 is separated from the second through hole 34 and the third through hole 35 by a dashed line. Specifically, the second through hole 34 is an irregularly shaped hole, that is, the second through hole 34 includes a third part 341 and a fourth part 342 communicating with the third part 341. The third part 341 directly faces the groove 32, that is, the third part 341 directly communicates with the groove 32. The fourth part 342 is staggered with the groove 32. In addition, the fourth part 342 extends away from the third through hole 35. Likewise, a structure of the third through hole 35, for the most part, is the same as the structure of the second through hole 34, and details are not described herein again. A difference is that a fourth part of the third through hole 35 extends away from the second through hole 34.

In addition, the second through hole 34 and the third through hole 35 may be, but are not limited to, irregularly shaped holes. The second through hole 34 and the third through hole 35 may also be of other shapes, which are not specifically limited in this application.

Referring again to FIG. 5, part of the pressing portion 5211 is located in the groove 32. Part of the pressing portion 32 is exposed to the outside of the electronic device 100. In this case, the part of the pressing portion 5211 that is exposed to the outside of the electronic device 100 is the first end portion 523. In addition, the first hook portion 5212 extends through the groove 32 into the second through hole 34. Specifically, the first part 5214 and the second part 5215 of the first hook portion 5212 are both located in the third part 341 of the second through hole 34.

In addition, the button assembly 50 further includes a pin 53. The pin 53 is mounted in the second through hole 34. It may be understood that the pin 53 may be locked in the second through hole 34 by, but not necessarily by, a bolt or a screw. For example, the pin 53 may also be fastened in the third through hole 35 by snap-fitting or magnetic attraction. In addition, part of the pin 53 is fixedly connected to the fourth part 342 of the second through hole 34, and part of the pin 53 extends through the fourth part 342 to the third part 341 between the pressing portion 5211 and the second part 5213 of the first hook portion 5212. When the pressing portion 5211 is not pressed, the first hook portion 5212 is hooked to the pin 53, that is, the second part 5213 is in contact with the pin 53. When the pressing portion 5211 is pressed, the pressing portion 5211 moves in the groove 32. At this time, the first hook portion 5212 is disengaged from the pin 53, that is, the second part 5213 is not in contact with the pin 53. In other words, when the pressing portion 5211 is pressed, the pin 53 moves in the movement space S.

In addition, the second hook portion 5213 extends through the groove 32 into the third through hole 35. When the pressing portion 5211 is not pressed, the second hook portion 5213 is hooked to a hole wall of the third through hole 35, that is, the second part of the second hook portion 5213 is in contact with a wall surface of the fourth part of the third through hole 35. When the pressing portion 5211 is pressed, the pressing portion 5211 moves in the groove 32. At this time, the second hook portion 5213 is disengaged from the hole wall of the third through hole 35, that is, the second part of the second hook portion 5213 is not in contact with the wall surface of the fourth part of the third through hole 35.

It may be understood that, in the foregoing arrangement, both the first hook portion 5212 and the second hook portion 5213 can be fitted onto the frame 30 in a fitting process of the cap 521. Specifically, the first hook portion 5212 extends through the groove 32 into the second through hole 34. The second hook portion 5213 extends through the groove 32 into the third through hole 35. Then the second hook portion 5213 is hooked to the hole wall of the third through hole 35. Then the pin 53 is fixedly connected in the third through hole 35, so that the second hook portion 5213 is hooked to the pin 53. In this case, the cap 521 does not come out of the groove 32. The foregoing manner allows for a simple fitting process and easy operation.

In an implementation, both the second through hole 34 and the third through hole 35 communicate with the accommodation space 60. In this case, because the groove 32 has little space, it is not easy to fit the pin 53 into the second through hole 34 from the groove 32 during the fitting of the pin 53. In this case, when the second through hole 34 communicates with the accommodation space 60, the pin 53 can be fitted into the second through hole 34 from the side of the accommodation space 60. Because there is more space on the side of the accommodation space 60, it is convenient for working personnel to operate.

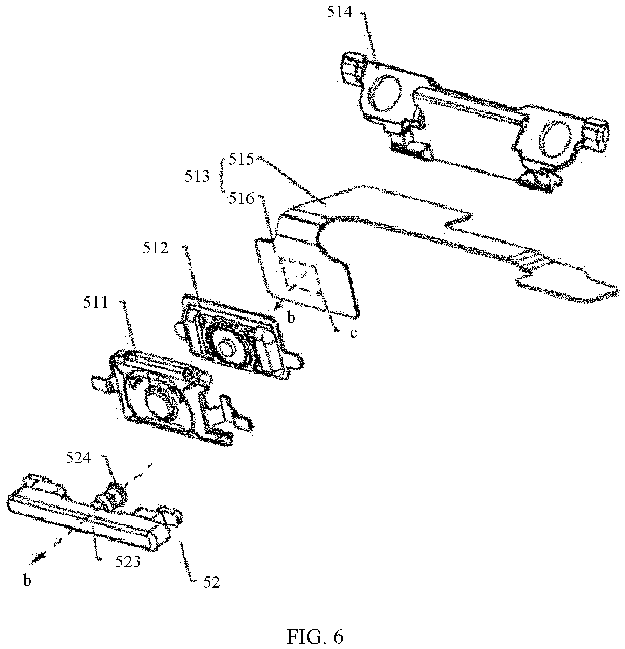

Referring to FIG. 6, FIG. 6 is a schematic exploded view of a button assembly 50 of the electronic device 100 shown in FIG. 1.

The switching member 51 includes an elastic member 511, a switch 512, a flexible circuit board 513, and a fastening bracket 514.

It may be understood that when the user presses the pressing member 52, the pressing member 52 presses on the elastic member 511 under an external force. Under this pressure, the elastic member 511 is partially compressed toward the switch 512 and presses against the switch 512. The switch 512 turns on under the external force and generates an electrical signal, which is transmitted to the main board 40 via the flexible circuit board 513. When the user releases the pressing member 52, the elastic member 511 is not subjected to pressure. In this case, the elastic member 511 returns to its original state under its own elastic force. In this case, the elastic member 511 pushes the pressing member 52 to its original position under its own elastic force. At the same time, the switch 512 is disconnected and stops generating an electrical signal. The flexible circuit board 513 cannot receive an electrical signal.

It may be understood that the elastic member 511 can apply an acting force to the switch 512 under the action of an external force, to cause the switch 512 to turn on and generate an electrical signal. In addition, when not subjected to a force, the elastic member 511 can further push the pressing member 52 to its original position, and disconnect the switch 512 from the electrical connection. The elastic member 511 can be used for two purposes.

In addition, the switch 512 can be configured to generate an electrical signal, which can be used to determine whether to light up the curved display 10.

In addition, the flexible circuit board 513 is configured to secure the switch 512 and transfer the electrical signal generated by the switch 512 to the main board 40.

In addition, the fastening bracket 514 is configured to fixedly connect the elastic member 511, the switch 512, and the flexible circuit board 513 to the frame 30, so as to ensure the firmness and stability of the connection between the switching member 51 and the frame 30.

The following describes a fitting relationship between the elastic member 511, the switch 512, the flexible circuit board 513, and the fastening bracket 514 in detail based on related accompanying drawings.

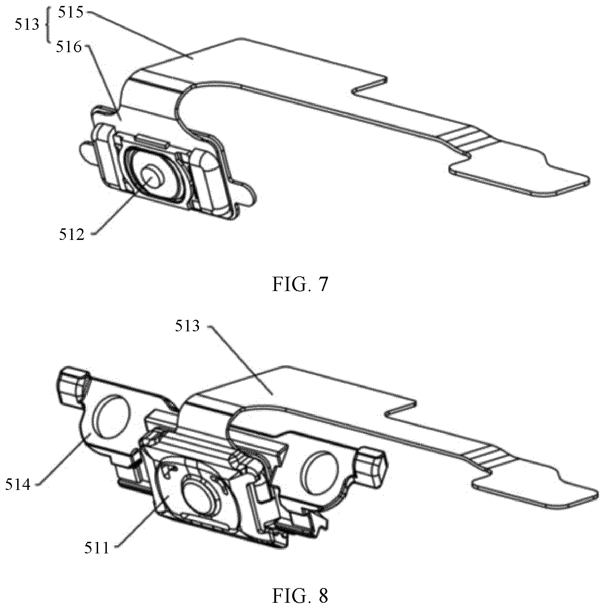

Referring to FIG. 6 and FIG. 7, FIG. 7 is a schematic diagram of a partial structure of a button assembly 50 of the electronic device 100 shown in FIG. 1.

The flexible circuit board 513 includes a first section 516 and a second section 515. The second section 515 is bent and connected to the first section 516.

The switch 512 is mounted to the first section 516 and is electrically connected to the first section 516. The second end portion 524 is disposed opposite the switch 512. An included angle between the first section 516 and a first direction ranges from 60° to 120°. It may be understood that the included angle between the first section 516 and the first direction is an included angle between the board surface of the first section 516 and the first direction. FIG. 6 illustrates the first direction b by a dashed line with an arrow. In addition, FIG. 6 illustrates, by a dashed box, a plane c in which the board surface of the first section 516 is located. In this case, an included angle between the first direction b and the plane c is the included angle between the first section 516 and the first direction. In addition, when the second end portion 524 is disposed opposite the switch 512, the second end portion 524 can apply an acting force to the switch 512, so as to cause the switch 512 to generate an electrical signal.

It may be understood that providing the second section 515 that is bent and connected to the first section 516 can not only allow for a more flexible mounting manner of the flexible circuit board 513 to avoid interference between the flexible circuit board 513 and the frame 30, but can also allow an electrical signal transmitted to the first section 516 to be transmitted to the outside of the switching member 51, such as the main board 40, via the second section 515.

In addition, setting the included angle between the first section 516 and the first direction to be from 60° to 120° ensures that the pressing member 52 can exactly press on the switching member 51. In addition, at this angle, the user can easily apply an acting force to the switching member 51 via the pressing member 51. In other words, there is no need to apply a large force to the pressing member 52, and the pressing member 52 can cause the switch 512 to generate an electrical signal. Therefore, the user feels good when pressing the button assembly 50.

In an implementation, the included angle between the first section 516 and the first direction is 90°. In this case, the user can apply a vertical force to the switching member 52 via the pressing member 51, and therefore the switching member 52 can generate an electrical signal even under a small force applied. In this case, the user feels good when pressing, and user experience is good.

Referring to FIG. 8, FIG. 8 is a schematic diagram of a structure of a switching member 52 of the electronic device 100 shown in FIG. 1.

As shown in FIG. 7, the elastic member 511 and the fastening bracket 514 wrap the switch 512. In this case, the elastic member 511 covers the switch 512. Part of the flexible circuit board 513 protrudes from between the elastic member 511 and the fastening bracket 514. It may be understood that the elastic member 511 can be further configured to effectively protect the switch 512 from damage due to collision with other components.

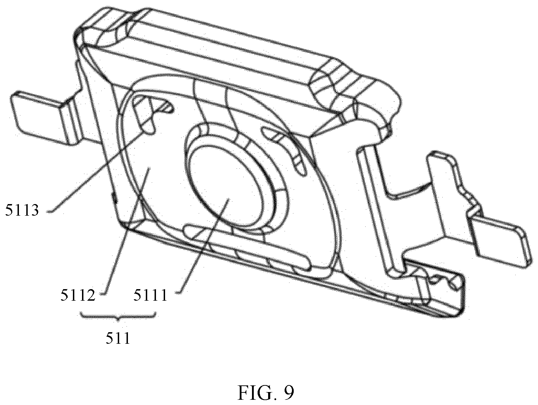

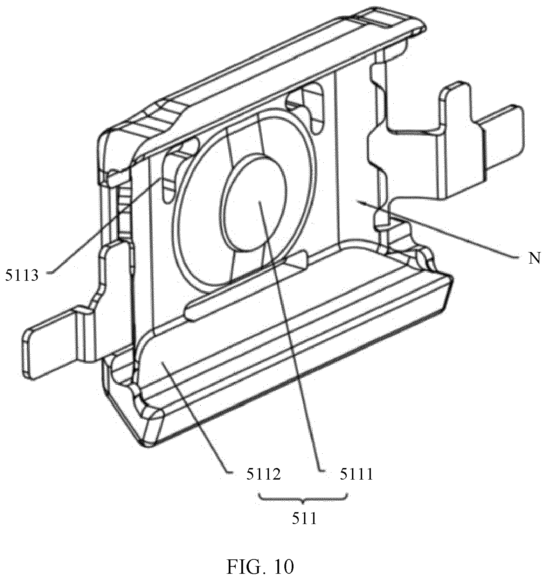

Referring to FIG. 9 and FIG. 10, FIG. 9 is a schematic diagram of a structure from a perspective of an elastic member 511 of the switching member 51 shown in FIG. 8; and FIG. 10 is a schematic diagram of a structure from another perspective of an elastic member 511 of the switching member 51 shown in FIG. 8.

The elastic member 511 includes a middle portion 5111 and a peripheral portion 5112 connected to the periphery of the middle portion 5111. As shown in FIG. 6, the middle portion 5111 is disposed opposite the second end portion 524. In this case, when the pressing member 52 is pressed, the second end portion 524 is in contact with the middle portion 5111, that is, a position of the middle portion 5111 to be in contact with the second end portion 524. In addition, the edge of the peripheral portion 5112 is bent toward the switch 512. In this case, the middle portion 5111 and the peripheral portion 5112 enclose a squeezing space N, that is, the elastic member 511 is substantially of a frame-like structure. In this case, the switch 512 is located in the squeezing space N.

It may be understood that when the user presses the pressing member 52, the pressing member 52 presses on the middle portion 5111 of the elastic member 511 under an external force. The middle portion 5111 compresses the squeezing space N under pressure and presses against the switch 512. When the user releases the pressing member 52, the middle portion 5111 is not subjected to pressure. In this case, the middle portion 5111 returns to its original state under its own elastic force. In this case, the middle portion 5111 and the peripheral portion 5112 together push the pressing member 52 to its original position under their own elastic force, and the squeezing space N is restored to its original state.

Referring again to FIG. 9 and FIG. 10, the peripheral portion 5112 is provided with a via hole 5113. It may be understood that when the peripheral portion 5112 is provided with the via hole 5113, the peripheral portion 5112 has better elasticity. In other words, the via hole 5113 can reduce stress of the peripheral portion 5112. In this case, when the pressing member 52 presses on the middle portion 5111 of the elastic member 511, the middle portion 5111 is more easily deformed because the peripheral portion 5112 has better elasticity. Therefore, the user does not need to apply a very large force to deform the middle portion 5111, so that the user feels much better when pressing the button assembly 50. In addition, because the user presses the button assembly 50 with a relatively small force, the elastic member 511 is also subjected to relatively small pressure, and the elastic member 511 is not easily damaged due to relatively large pressure, thereby ensuring a relatively long service life of the elastic member 511.

In an implementation, the shape of the via hole 5113 may be, but is not limited to, an L shape, an elongated shape, a diagonal bar shape, or a circular shape. In addition, when there are a plurality of via holes 5113, the shapes of each two via holes 5113 may be completely the same or may be different.

In an implementation, when there are a plurality of via holes 5113, the plurality of via holes 5113 are spaced apart around the middle portion 5111.

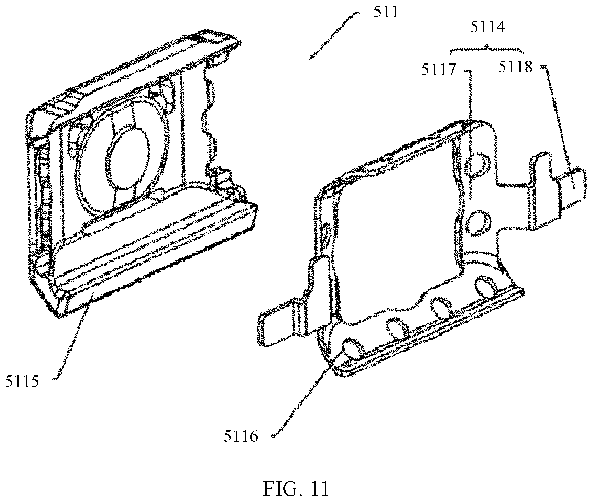

Referring to FIG. 11, FIG. 11 is a schematic exploded view of the elastic member 511 shown in FIG. 10.

The elastic member 511 includes a metal portion 5114 and a soft rubber portion 5115. Part of the metal portion 5114 is embedded in the soft rubber portion 5115. Part of the metal portion 5114 is exposed from the soft rubber portion 5115.

It may be understood that the metal portion 5114 is embedded in the soft rubber portion 5115, which can increase a capability of the elastic member 511 to resist an external force, that is, avoid the failure of the soft rubber portion 5115 due to long-term use, thereby significantly extending the service life of the elastic member 511; in addition, the metal portion 5114 facilitates the fixed connection to other components.

In an implementation, the metal portion 5114 is a relatively soft metal material, for example, aluminum or copper.

In an implementation, during the preparation process of the elastic member 511, the metal portion 5114 may be formed first. After the metal portion 5114 is formed, the soft rubber portion 5115 is formed on part of the metal portion 5114 through an injection molding process. In this case, the soft rubber portion 5115 covers the part of the metal portion 5114.

In an implementation, the metal portion 5114 exposed from the soft rubber portion 5115 is provided with a buffer hole 5116. The buffer hole 5116 is used to reduce the hardness of the metal portion 5114 to ensure that the formed elastic member 511 has sufficient elasticity.

In an implementation, the middle portion 5111 of the elastic member 511 does not include the metal portion 5114, that is, the metal portion 5114 forms the peripheral portion 5112 of the elastic member 511. In this case, the metal portion 5114 does not affect an elastic force of the middle portion 5111 of the elastic member 511.

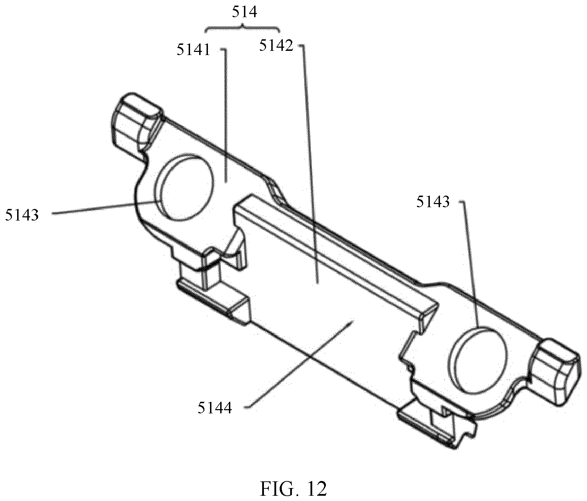

Referring to FIG. 12, FIG. 12 is a schematic diagram of a structure of a fastening bracket 514 of the switching member 51 shown in FIG. 8.

A material of the fastening bracket 514 may be a hard plastic material. The fastening bracket 514 includes a fastening portion 5141 and a bearing portion 5142 connected to the fastening portion 5141. The fastening portion 5141 is located on either side of the bearing portion 5142.

As shown in FIG. 6, the bearing portion 5142 is fixedly connected to a surface of the first section 516 that is away from the switch 512. Specifically, the bearing portion 5142 has a bearing surface 5144. The bearing surface 5144 is fixedly connected to the first section 516. The orientation of the bearing surface 5144 is the same as the orientation of the first section 516 of the flexible circuit board 513, so that when the switch 512 is pressed on by the elastic member 511, the bearing portion 5141 can better support the flexible circuit board 513 so as to effectively support the switch 512, preventing the switch 512 from failing to generate an electrical signal due to movement under the pressing of the elastic member 511.

As shown in FIG. 11, the metal portion 5114 includes a frame 5117 and connecting legs 5118. The frame 5117 is embedded in the soft rubber portion 5115. The connecting legs 5118 are exposed from the soft rubber portion 5115. In this case, the fastening portion 5141 of the fastening bracket 514 is fixedly connected to the connecting legs 5118, that is, the fastening portion 5141 of the fastening bracket 514 is fixedly connected to the metal portion 5114. In this case, the elastic member 511 and the fastening bracket 514 form a whole. Therefore, the elastic member 511 and the fastening bracket 514 can effectively fasten the switch 512 and the flexible circuit board 513 to ensure that the switching member 51 has better integrity and better stability.

In an implementation, the connecting legs 5118 of the metal portion 5114 are fixedly connected to the fastening portion 5141 of the fastening bracket 514 by welding. Certainly, the connecting legs 5118 of the metal portion 5114 may also be fixedly connected to the fastening bracket 514 by an adhesive, or fixedly connected to the fastening bracket 514 by fasteners (bolts, screws, or pins).

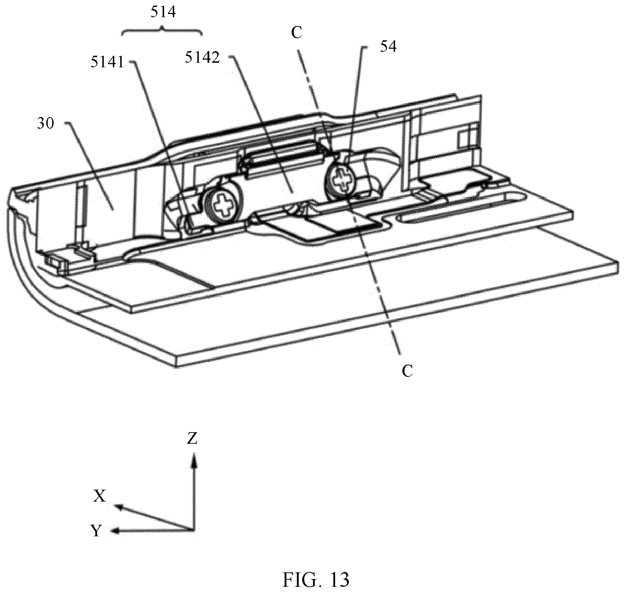

Referring to FIG. 13, FIG. 13 is a schematic diagram of a partial structure of the electronic device 100 shown in FIG. 1.

The fastening portion 5141 of the fastening bracket 514 is fixedly connected to the frame 30.

As shown in FIG. 6, the fastening portion 5141 of the fastening bracket 514 is fixedly connected to the frame 30, so that the flexible circuit board 513 fixedly connected to the fastening bracket 514 can be firmly connected to the frame 30. In addition, because the switch 512 is mounted to the flexible circuit board 513, and the elastic member 511 covers the switch 512, the flexible circuit board 513, the switch 512, and the elastic member 511 can be fixedly connected to the frame 30 together with the fastening bracket 514. In this case, the switching member 51 and the frame 30 are connected more firmly, that is, the switching member 51 and the frame 30 have better stability.

Referring again to FIG. 13, the button assembly 50 further includes a fastener 54. The fastener 54 locks the fastening portion 5141 of the fastening bracket 514 to the frame 30. The fastener 54 may be, but is not limited to, a bolt. For example, the fastener 54 may also be a screw or a pin.

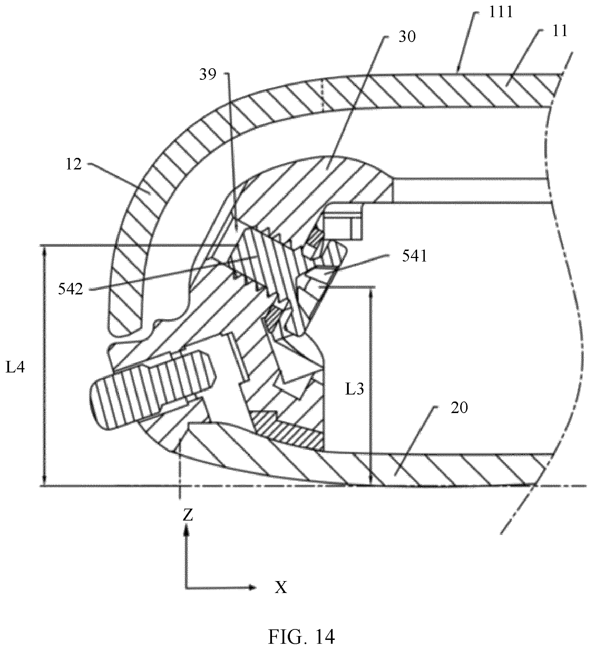

Referring to FIG. 14, FIG. 14 is a partial schematic sectional view of the electronic device 100 shown in FIG. 13 at line C-C.

Specifically, as shown in FIG. 12, the fastening bracket 514 is provided with first mounting holes 5143. There are two first mounting holes 5143. In addition, referring to FIG. 14, the frame 30 is provided with second mounting holes 39. There are also two second mounting holes 39. The two first mounting holes 5143 and the two second mounting holes 39 are disposed in a one-to-one correspondence. In this case, there are also two fasteners 54. Each fastener 54 successively passes through one first mounting hole 5143 and one second mounting hole 39. In this case, the fasteners 54 lock the fastening bracket 514 to the frame 30.

In other implementations, the fastening bracket 514 may also be fixedly connected to the frame 30 by welding or an adhesive.

In addition, the fastener 54 is inclined. The fastener 54 includes a first end 541 and a second end 542 that are disposed opposite each other. The first end 541 is an end portion of the fastener 54 that is away from the frame 30. The second end 542 is an end portion of the fastener 54 that is locked to the frame 30. A Z-direction distance of the first end 541 from the back cover 20 is a third distance L3. A Z-direction distance of the second end 542 from the back cover 20 is a fourth distance L4. The third distance L3 is less than the fourth distance L4. In other words, a vertical distance of the first end 541 from the first display surface is less than a vertical distance of the second end 542 to the first display surface 111. In this case, the first end 541 is disposed closer to the back cover 20 than the second end 542.

It may be understood that when the third distance L3 is less than the fourth distance L4, it is more convenient for working personnel to fit the fastener 54. Specifically, because the first end 541 is the end portion of the fastener 54 that is away from the frame 30, and the second end 542 is the end portion of the fastener 54 that is locked to the frame 30, the first end 541 is the end to which the user applies a force. In other words, the user applies a force to the first end 541, so that the second end 542 of the fastener 54 is locked to the frame 30. Before the back cover 20 is fitted to the frame 30, one side of the frame 30 is an opening region, that is, a region open to the outside. In this case, because the third distance L3 is less than the fourth distance L4, that is, the first end 541 is disposed closer to the back cover 20 than the second end 542, the first end 541 faces the opening region. Therefore, when the user is to apply pressure to the first end 541, the working personnel may apply a force to the first end 541 through the opening region. In this case, there is much space for the working personnel to apply a force, and the fitting difficulty is relatively low.

In addition, because the third distance L3 is less than the fourth distance L4, that is, the first end 541 is disposed closer to the back cover 20 than the second end 542, the fastener 54 can be easily disposed close to the surrounding region of the bent portion 12. It may be understood that because the surrounding region of the bent portion 12 is relatively narrow, it is difficult to fit most of the components in the region. In this case, when the fastener 54 can be fitted in the surrounding region of the bent portion 12, the fastener 54 can effectively utilize the region, thereby avoiding a waste of the part of region due to idleness, and significantly improving utilization of the internal space of the electronic device 100.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic device (100), comprising a curved display (10), a back cover (20), a frame (30), and a button assembly (50), wherein the curved display is disposed opposite the back cover, edges of the curved display are bent toward the back cover, the frame is located between the curved display and the back cover, the curved display, the back cover, and the frame enclose an accommodation space (60), the frame is provided with a communication space (31), and the communication space allows the accommodation space to communicate with the outside of the electronic device; and
the button assembly comprises a switching member (51) and a pressing member (52), the switching member is located in the accommodation space, the pressing member comprises a first end portion (521) and a second end portion (524), the second end portion is located in the accommodation space, at least part of the second end portion is disposed opposite the switching member, the first end portion is exposed to the outside of the electronic device through the communication space, a Z-direction distance of the first end portion from the back cover is a first distance, a Z-direction distance of the second end portion from the back cover is a second distance, and the first distance is less than the second distance;
wherein the switching member comprises a switch (512) and a flexible circuit board (513), the flexible circuit board comprises a first section (516) and a second section (515), the second section is bent and connected to the first section, the switch is mounted to the first section and is electrically connected to the first section, the second end portion is disposed opposite the switch, an included angle between the first section and a first direction ranges from 60° to 120°, and the first direction is a direction in which the second end portion faces the first end portion;
wherein the switching member further comprises a fastening bracket (514), the fastening bracket comprises a fastening portion (5141) and a bearing portion (5142) connected to the fastening portion, the fastening portion is fixedly connected to the frame, and the bearing portion is fixedly connected to a surface of the first section that is away from the switch;
wherein the switching member further comprises a fastener (54), and the fastener locks the fastening portion to the frame; and
wherein the fastener comprises a first end (541) and a second end (542) that are disposed opposite each other, the first end is an end portion of the fastener that is away from the frame, the second end is an end portion of the fastener that is locked to the frame, a Z-direction distance of the first end from the back cover is a third distance, a Z-direction distance of the second end from the back cover is a fourth distance, and the third distance is less than the fourth distance.

2. The electronic device according to claim 1, wherein the curved display comprises a plane portion (11) and a bent portion (12) joining either side of the plane portion, the bent portion is bent toward the back cover, and a bending angle of the bent portion ranges from 60° to 120°.

3. The electronic device according to claim 1 or 2, wherein the pressing member comprises a cap (521) and a push rod (522) that are disposed opposite each other, an end portion of the cap away from the push rod is the first end portion, an end portion of the push rod away from the cap is the second end portion, and when a force is applied to the cap, the cap pushes the push rod, so that the push rod applies an acting force to the switching member.

4. The electronic device according to claim 3, wherein an outer surface of the frame is provided with a groove (32) and a first through hole (33), an opening of the first through hole is located on a bottom wall (321) of the groove, the first through hole communicates with the accommodation space, the groove and the first through hole form the communication space, the push rod comprises a push portion (5221) and an elastic portion (5222) disposed on the push portion, one end of the push portion is disposed opposite the cap, the other end of the push portion away from the cap is the second end portion, and an outer surface of the elastic portion is in contact with a hole wall of the first through hole.

5. The electronic device according to claim 4, wherein the frame is further provided with a second through hole (34) and a third through hole (35) that are spaced apart, openings of both the second through hole and the third through hole are located on the bottom wall of the groove, and the second through hole and the third through hole are located on two sides of the first through hole; the button assembly further comprises a pin (53), and the pin is mounted in the second through hole; and the cap comprises a pressing portion (5211), a first hook portion (5212), and a second hook portion (5213), the first hook portion and the second hook portion are respectively connected to two ends of the pressing portion, part of the pressing portion is located in the groove, the first hook portion extends through the groove into the second through hole and is hooked to the pin, and the second hook portion extends through the groove into the third through hole and is hooked to a hole wall of the third through hole.

6. The electronic device according to claim 1, wherein the switching member further comprises an elastic member (511), the elastic member covers the switch, the pressing member presses on the elastic member, and the elastic member exerts a force on the switch to cause the switch to generate an electrical signal.

7. The electronic device according to claim 6, wherein the elastic member comprises a middle portion (5111) and a peripheral portion (5112) connected to the periphery of the middle portion, the middle portion is disposed opposite the second end portion, and the peripheral portion is provided with a via hole.

8. The electronic device according to claim 6, wherein the elastic member comprises a metal portion (5114) and a soft rubber portion (5115), part of the metal portion is embedded in the soft rubber portion, and part of the metal portion is exposed from the soft rubber portion.

## Patentansprüche

1. Elektronische Vorrichtung (100), die eine gewölbte Anzeige (10), eine hintere Abdeckung (20), einen Rahmen (30) und eine Tastenanordnung (50) umfasst, wobei die gewölbte Anzeige gegenüber der hinteren Abdeckung eingerichtet ist, Kanten der gewölbten Anzeige zu der hinteren Abdeckung hin gebogen sind, der Rahmen sich zwischen der gewölbten Anzeige und der hinteren Abdeckung befindet, die gewölbte Anzeige, die hintere Abdeckung und der Rahmen einen Aufnahmeraum (60) umschließen, der Rahmen mit einem Verbindungsraum (31) versehen ist, und der Verbindungsraum es dem Aufnahmeraum ermöglicht, sich mit der Außenseite der elektronischen Vorrichtung zu verbinden; und
wobei die Tastenanordnung ein Schaltelement (51) und ein Druckelement (52) umfasst, das Schaltelement sich in dem Aufnahmeraum befindet, das Druckelement einen ersten Endabschnitt (521) und einen zweiten Endabschnitt (524) umfasst, der zweite Endabschnitt sich in dem Aufnahmeraum befindet, mindestens ein Teil des zweiten Endabschnitts gegenüber dem Schaltelement eingerichtet ist, der erste Endabschnitt der Außenseite der elektronischen Vorrichtung durch den Verbindungsraum ausgesetzt ist, ein Abstand in Z-Richtung des ersten Endabschnitts von der hinteren Abdeckung ein erster Abstand ist, ein Abstand in Z-Richtung des zweiten Endabschnitts von der hinteren Abdeckung ein zweiter Abstand ist und der erste Abstand kleiner als der zweite Abstand ist;
wobei das Schaltelement einen Schalter (512) und eine flexible Leiterplatte (513) umfasst, die flexible Leiterplatte einen ersten Bereich (516) und einen zweiten Bereich (515) umfasst, der zweite Bereich gebogen und mit dem ersten Bereich verknüpft ist, der Schalter an dem ersten Bereich montiert ist und mit dem ersten Bereich elektrisch verknüpft ist, der zweite Endabschnitt gegenüber dem Schalter eingerichtet ist, ein eingeschlossener Winkel zwischen dem ersten Bereich und einer ersten Richtung von 60° bis 120° reicht, und die erste Richtung eine Richtung ist, in der der zweite Endabschnitt dem ersten Endabschnitt zugewandt ist;
wobei das Schaltelement ferner eine Befestigungshalterung (514) umfasst, die Befestigungshalterung einen Befestigungsabschnitt (5141) und einen Lagerabschnitt (5142), der mit dem Befestigungsabschnitt verknüpft ist, umfasst, der Befestigungsabschnitt mit dem Rahmen fest verknüpft ist und der Lagerabschnitt mit einer Oberfläche des ersten Bereichs, der von dem Schalter entfernt ist, fest verknüpft ist;
wobei das Schaltelement ferner ein Befestigungsmittel (54) umfasst und das Befestigungsmittel den Befestigungsabschnitt mit dem Rahmen verriegelt; und
wobei das Befestigungsmittel ein erstes Ende (541) und ein zweites Ende (542) umfasst, die einander gegenüberliegend eingerichtet sind, das erste Ende ein Endabschnitt des Befestigungsmittels ist, der von dem Rahmen entfernt ist, das zweite Ende ein Endabschnitt des Befestigungsmittels ist, der mit dem Rahmen verriegelt ist, ein Abstand in Z-Richtung des ersten Endes von der hinteren Abdeckung ein dritter Abstand ist, ein Abstand in Z-Richtung des zweiten Endes von der hinteren Abdeckung ein vierter Abstand ist, und der dritte Abstand kleiner als der vierte Abstand ist.

2. Elektronische Vorrichtung nach Anspruch 1, wobei die gewölbte Anzeige einen ebenen Abschnitt (11) und einen gebogenen Abschnitt (12) umfasst, der beide Seiten des ebenen Abschnitts zusammenfügt, der gebogene Abschnitt zu der hinteren Abdeckung hin gebogen ist und ein Biegewinkel des gebogenen Abschnitts von 60° bis 120° reicht.

3. Elektronische Vorrichtung nach Anspruch 1 oder 2, wobei das Druckelement eine Kappe (521) und eine Schubstange (522) umfasst, die einander gegenüberliegend eingerichtet sind, ein Endabschnitt der Kappe von der Schubstange entfernt der erste Endabschnitt ist, ein Endabschnitt der Schubstange von der Kappe entfernt der zweite Endabschnitt ist und wenn eine Kraft auf die Kappe ausgeübt wird, die Kappe die Schubstange so schiebt, dass die Schubstange eine wirkende Kraft auf das Schaltelement ausübt.

4. Elektronische Vorrichtung nach Anspruch 3, wobei eine Außenoberfläche des Rahmens mit einer Nut (32) und einem ersten Durchgangsloch (33) versehen ist, eine Öffnung des ersten Durchgangslochs sich an einer Bodenwand (321) der Nut befindet, das erste Durchgangsloch sich mit dem Aufnahmeraum verbindet, die Nut und das erste Durchgangsloch den Verbindungsraum bilden, die Schubstange einen Schubabschnitt (5221) und einen elastischen Abschnitt (5222) umfasst, der auf dem Druckabschnitt eingerichtet ist, ein Ende des Schubabschnitts gegenüber der Kappe eingerichtet ist, das andere Ende des Schubabschnitts von der Kappe entfernt der zweite Endabschnitt ist, und eine Außenoberfläche des elastischen Abschnitts mit einer Lochwand des ersten Durchgangslochs in Kontakt steht.

5. Elektronische Vorrichtung nach Anspruch 4, wobei der Rahmen ferner mit einem zweiten Durchgangsloch (34) und einem dritten Durchgangsloch (35) versehen ist, die voneinander beabstandet sind, Öffnungen von sowohl dem zweiten Durchgangsloch als auch dem dritten Durchgangsloch sich an der Bodenwand der Nut befinden, und das zweite Durchgangsloch und das dritte Durchgangsloch sich auf zwei Seiten des ersten Durchgangslochs befinden; wobei die Tastenanordnung ferner einen Stift (53) umfasst und der Stift in dem zweiten Durchgangsloch montiert ist; und die Kappe einen Druckabschnitt (5211), einen ersten Hakenabschnitt (5212) und einen zweiten Hakenabschnitt (5213) umfasst, wobei der erste Hakenabschnitt und der zweite Hakenabschnitt jeweils mit zwei Enden des Druckabschnitts verknüpft sind, ein Teil des Druckabschnitts sich in der Nut befindet, der erste Hakenabschnitt sich durch die Nut in das zweite Durchgangsloch erstreckt und an dem Stift eingehakt ist, und sich der zweite Hakenabschnitt durch die Nut in das dritte Durchgangsloch erstreckt und an einer Lochwand des dritten Durchgangslochs eingehakt ist.

6. Elektronische Vorrichtung nach Anspruch 1, wobei das Schaltelement ferner ein elastisches Element (511) umfasst, das elastische Element den Schalter abdeckt, das Druckelement auf das elastische Element drückt und das elastische Element eine Kraft auf den Schalter ausübt, um den Schalter zu veranlassen, ein elektrisches Signal zu erzeugen.

7. Elektronische Vorrichtung nach Anspruch 6, wobei das elastische Element einen Mittelabschnitt (5111) und einen Umfangsabschnitt (5112) umfasst, der mit dem Umfang des Mittelabschnitts verknüpft ist, wobei der Mittelabschnitt gegenüber dem zweiten Endabschnitt eingerichtet ist, und der Umfangsabschnitt mit einem Durchgangsloch versehen ist.

8. Elektronische Vorrichtung nach Anspruch 6, wobei das elastische Element einen Metallabschnitt (5114) und einen Weichgummiabschnitt (5115) umfasst, wobei ein Teil des Metallabschnitts in den Weichgummiabschnitt eingebettet ist, und ein Teil des Metallabschnitts von dem Weichgummiabschnitt ausgesetzt ist.

## Revendications

1. Dispositif électronique (100), comprenant un écran incurvé (10), un couvercle arrière (20), un cadre (30) et un ensemble bouton (50), dans lequel l'écran incurvé est disposé à l'opposé du couvercle arrière, des bords de l'écran incurvé sont courbés vers le couvercle arrière, le cadre est situé entre l'écran incurvé et le couvercle arrière, l'écran incurvé, le couvercle arrière et le cadre renferment un espace de logement (60), le cadre est pourvu d'un espace de communication (31), et l'espace de communication permet à l'espace de logement de communiquer avec l'extérieur du dispositif électronique ; et
l'ensemble bouton comprend un élément de commutation (51) et un élément de pression (52), l'élément de commutation est situé dans l'espace de logement, l'élément de pression comprend une première partie d'extrémité (521) et une seconde partie d'extrémité (524), la seconde partie d'extrémité est située dans l'espace de logement, au moins une partie de la seconde partie d'extrémité est disposée à l'opposé de l'élément de commutation, la première partie d'extrémité est exposée à l'extérieur du dispositif électronique à travers l'espace de communication, une distance de direction Z de la première partie d'extrémité à partir du couvercle arrière est une première distance, une distance de direction Z de la seconde partie d'extrémité à partir du couvercle arrière est une deuxième distance, et la première distance est inférieure à la deuxième distance ;
dans lequel l'élément de commutation comprend un commutateur (512) et une carte de circuit imprimé flexible (513), la carte de circuit imprimé flexible comprend une première section (516) et une seconde section (515), la seconde section est courbée et reliée à la première section, le commutateur est monté sur la première section et est connecté électriquement à la première section, la seconde partie d'extrémité est disposée à l'opposé du commutateur, un angle inclus entre la première section et une première direction se situe dans une plage comprise entre 60° et 120°, et la première direction est une direction dans laquelle la seconde partie d'extrémité fait face à la première partie d'extrémité ;
dans lequel l'élément de commutation comprend en outre un support de fixation (514), le support de fixation comprend une partie de fixation (5141) et une partie de palier (5142) reliée à la partie de fixation, la partie de fixation est reliée à demeure au cadre, et la partie de palier est reliée à demeure à une surface de la première section qui est à l'écart du commutateur ;
dans lequel l'élément de commutation comprend en outre une fixation (54), et la fixation verrouille la partie de fixation sur le cadre ; et
dans lequel la fixation comprend une première extrémité (541) et une seconde extrémité (542) qui sont disposées à l'opposé l'une de l'autre, la première extrémité est une partie d'extrémité de la fixation qui est à l'écart du cadre, la seconde extrémité est une partie d'extrémité de la fixation qui est verrouillée sur le cadre, une distance de direction Z de la première extrémité à partir du couvercle arrière est une troisième distance, une distance de direction Z de la seconde extrémité à partir du couvercle arrière est une quatrième distance, et la troisième distance est inférieure à la quatrième distance.

2. Dispositif électronique selon la revendication 1, dans lequel l'écran incurvé comprend une partie plane (11) et une partie courbée (12) joignant de part et d'autre la partie plane, la partie courbée est courbée vers le couvercle arrière, et un angle de courbure de la partie courbée se situe dans la plage comprise entre 60° et 120°.

3. Dispositif électronique selon la revendication 1 ou 2, dans lequel l'élément de pression comprend un capuchon (521) et une tige de poussée (522) qui sont disposés à l'opposé l'un de l'autre, une partie d'extrémité du capuchon à l'écart de la tige de poussée est la première partie d'extrémité, une partie d'extrémité de la tige de poussée à l'écart du capuchon est la seconde partie d'extrémité, et lorsqu'une force est appliquée au capuchon, le capuchon pousse la tige de poussée, de sorte que la tige de poussée applique une force agissant sur l'élément de commutation.

4. Dispositif électronique selon la revendication 3, dans lequel une surface externe du cadre est pourvue d'une rainure (32) et d'un premier trou traversant (33), une ouverture du premier trou traversant est située sur une paroi inférieure (321) de la rainure, le premier trou traversant communique avec l'espace de logement, la rainure et le premier trou traversant forment l'espace de communication, la tige de poussée comprend une partie de poussée (5221) et une partie élastique (5222) disposée sur la partie de poussée, une extrémité de la partie de poussée est disposée à l'opposé du capuchon, l'autre extrémité de la partie de poussée à l'écart du capuchon est la seconde partie d'extrémité, et une surface externe de la partie élastique est en contact avec une paroi de trou du premier trou traversant.

5. Dispositif électronique selon la revendication 4, dans lequel le cadre est en outre pourvu d'un deuxième trou traversant (34) et d'un troisième trou traversant (35) qui sont espacés, des ouvertures à la fois du deuxième trou traversant et du troisième trou traversant sont situées sur la paroi inférieure de la rainure, et le deuxième trou traversant et le troisième trou traversant sont situés sur deux côtés du premier trou traversant ; l'ensemble bouton comprend en outre une broche (53), et la broche est montée dans le deuxième trou traversant ; et le capuchon comprend une partie de pression (5211), une première partie de crochet (5212) et une seconde partie de crochet (5213), la première partie de crochet et la seconde partie de crochet sont respectivement reliées à deux extrémités de la partie de pression, une partie de la partie de pression est située dans la rainure, la première partie de crochet s'étend à travers la rainure dans le deuxième trou traversant et est accrochée à la broche, et la seconde partie de crochet s'étend à travers la rainure dans le troisième trou traversant et est accrochée à une paroi de trou du troisième trou traversant.

6. Dispositif électronique selon la revendication 1, dans lequel l'élément de commutation comprend en outre un élément élastique (511), l'élément élastique recouvre le commutateur, l'élément de pression presse sur l'élément élastique, et l'élément élastique exerce une force sur le commutateur pour amener le commutateur à générer un signal électrique.

7. Dispositif électronique selon la revendication 6, dans lequel l'élément élastique comprend une partie médiane (5111) et une partie périphérique (5112) reliée à la périphérie de la partie médiane, la partie médiane est disposée à l'opposé de la seconde partie d'extrémité, et la partie périphérique est pourvue d'un trou d'interconnexion.

8. Dispositif électronique selon la revendication 6, dans lequel l'élément élastique comprend une partie métallique (5114) et une partie en caoutchouc souple (5115), une partie de la partie métallique est incorporée dans la partie en caoutchouc souple, et une partie de la partie métallique est exposée à partir de la partie en caoutchouc souple.
